# EUROPEAN PATENT SPECIFICATION

(11) **EP 0 435 676 B1**
(45) Date of publication and mention of the grant of the patent: **16.08.1995**
(21) Application number: 90314342.8
(22) Date of filing: 27.12.1990
(51) Int. Cl.: G02F 1/137, G02F 1/1347

(54) **Liquid crystal display device for displaying multiple or full colors**
Flüssigkristall-Anzeigevorrichtung zur Anzeige von mehreren oder allen Farben
Dispositif d'affichage à cristaux liquides pour afficher plusieurs ou toutes les couleurs

(30) Priority: 28.12.1989 JP 339958/89
(43) Date of publication of application: 03.07.1991
(73) Proprietor: SHARP KABUSHIKI KAISHA, Osaka 545 (JP)
(72) Inventor: Ban, Mariko, Nara-shi, Nara-ken (JP); Kimura, Naofumi, Nara-shi, Nara-ken (JP); Ishii, Yutaka, Nara-shi, Nara-ken (JP)
(74) Representative: Brown, Kenneth Richard

(56) References cited:
- WO-A-88/02128
- PATENT ABSTRACTS OF JAPAN vol. 13, no. 271 (P-889), 9 March 1989 ; & JP-A-1 063 926
- PATENT ABSTRACTS OF JAPAN vol. 8, no. 97 (P-272), 20 January 1984 ; & JP-A-59 010 929
- PATENT ABSTRACTS OF JAPAN, vol. 10, no. 45 (P-430), 21 February 1986 ; & JP-A-60 191 226
- PATENT ABSTRACTS OF JAPAN, vol. 3, no. 61 (E-113), 26 May 1979 ; & JP-A-54 039 664
- PATENT ABSTRACTS OF JAPAN, vol. 2, no. 115 (E-59), 25 September 1978 ; & JP-A-53 080 242

## Description

### BACKGROUND OF THE INVENTION

The present invention relates to a liquid crystal display device which displays bright, clear colors.

Liquid crystal display devices are widely used in watches, calculators, computer terminals, word processors, televisions, and other common applications. Multicolor and full-color liquid crystal display devices have also been brought into use in the graphics and image processing display fields.

A conventional color liquid crystal display devices uses a so-called twisted nematic (TN) mode wherein the initial orientation of the liquid crystal molecules inside the liquid crystal cell are twisted 90 degrees. Red, green, and blue color filters are provided in a mosaic pattern inside the liquid crystal cell, and a pair of polarization plates are provided in front of and behind the liquid crystal cell. The conventional color liquid crystal display device having such a structure achieves a color display by utilizing the optical switching characteristics of the TN mode. With this method, a multiple color display is achieved through additive color mixing because the red, green, and blue colored pixels (color filters) are arrayed on a flat surface. Specifically, to display white, light is passed through all three color filters, red, green, and blue. To display red, for example, light is passed only by the red filter and is blocked by the green and blue filters. To improve the contrast, the polarization degree of the polarization plates is increased.

However, since a multicolor display is achieved with the conventional liquid crystal display device as described above through additive color mixing with color filters arrayed on a plane surface, transmissivity during a white display is from 20% to 40% of that of an LCD without color filters. In addition, since red, for example, is displayed by blocking the passage of light through the green and blue color filters, transmissivity is further reduced when displaying red. The same is true with the other two colors. When polarization plates are used, transmissivity decreases by another 30% to 45%, resulting in an overall reduction in transmissivity when displaying white of between 6% and 18%. This causes the screen to become extremely dark. Because of this, it is not possible to provide a reflection plate behind the liquid crystal cell to reflect light as in a reflective display. It should also be noted that transmissivity decreases even more when color purity is emphasized. As thus described, the liquid crystal display which achieves a multiple color display through additive color mixing using a mosaic array of color filters and liquid crystal as optical switches has a low transmissivity characteristic, and is unsuited to use in reflective color displays.

Therefore, a problem addressed by the present invention is to provide a liquid crystal display device which can display bright, vivid colors, and is therefore suitable for use in reflective color displays.

The document JP-A-1063926 discloses a color display device having discrete areas of colored liquid crystal separated by partitions.

According to the present invention, there is provided a liquid crystal display device for displaying multiple colors wherein a light modulation portion containing a liquid crystal or a mixture of liquid crystals is sandwiched between a pair of transparent substrates each having electrodes on an inner surface thereof, the light modulation portion including a plurality of mutually adjacent regions of at least two different kinds arranged in a predetermined pattern in a single light modulation layer parallel to the transparent substrates, each of said regions containing dichroic pigment in addition to the liquid crystal or the mixture of liquid crystals, the dichroic pigment contained in the regions of one kind being different from the dichroic pigment contained in the regions of the other kinds, characterised by a shutter layer containing a liquid crystal or a mixture of liquid crystals laminated on said single light modulation layer in the light modulation portion, the liquid crystal or the mixture of liquid crystals contained in the shutter layer being orientable in a specific direction with a threshold voltage which is different from a threshold voltage for the liquid crystal or the mixture of liquid crystals contained in the light modulation layer, and by a shield layer formed in the shutter layer at sites corresponding to boundaries of said regions in the light modulation layer.

When an electric field is not applied to the light modulation portion, or when a field is applied but a threshold voltage of each region is not exceeded, the liquid crystal molecules are oriented in an unordered manner in each region of the light modulation portion. At this time, because only polarized light in which the direction of oscillation is parallel to long axes of molecules of the dichroic pigment contained in each region is absorbed, each region is in the colored state. Therefore, colors are displayed as a result of additive mixing by light passing the light modulation portion.

When an electric field exceeding the threshold voltage is applied to only one part of the light modulation portion, the liquid crystal molecules in this part of the light modulation portion are orientated with long axes of the liquid crystal molecules parallel to the direction of the electric field, and the dichroic pigment molecules in this part are also parallel to the liquid crystal molecules. Thus, light absorption stops and this part of the light modulation portion becomes transparent and uncolored. The color display thus results from the colors in all regions other than regions in that part. Because light is passing through those regions at this time, the transmissivity of the overall light modulation portion increases when compared with the conventional display, and a bright color display is therefore achieved. Furthermore, when an electric field exceeding the threshold voltage is applied to each region in the light modulation portion, light absorption in each region stops, and the entire light modulation portion becomes transparent and uncolored. As a result, a bright, white display is achieved without reducing display transmissivity by means of color filters. Thus, a bright, vivid color display can be achieved without using polarization plates or color filters, and this liquid crystal display device can therefore be used for a reflective color display by providing a back reflection plate.

Each region in the above light modulation portion may contain a polymer resin supporting the liquid crystals. By mixing this polymer resin with liquid crystals containing dichroic pigment, the density of the liquid crystals and the dichroic pigment can be uniform within the single light modulation layer formed by said regions.

Furthermore, a shutter layer containing a liquid crystal or a mixture of liquid crystals is laminated on the single light modulation layer in the light modulation portion. The liquid crystal or the mixture of liquid crystals contained in the shutter layer is caused to be orientated in a specific direction with a threshold voltage which is different from a threshold voltage for the liquid crystal or the mixture of liquid crystals contained in the light modulation layer.

In this case, a black display is achieved when the electric field applied to the light modulation portion is less than the threshold voltage of the shutter layer. In particular, by setting the threshold voltage of the shutter layer lower than the threshold voltage of each region in the light modulation layer, a black display, a color display, or a white display can be achieved by varying the strength of the applied field.

The present invention will become more fully understood from the detailed description given hereinbelow and the accompanying drawings which are given by way of illustration only, and thus are not limitative of the present invention, and wherein:
Fig. 1 is a cross sectional view showing a liquid crystal display device;
Figs. 2A-2E are explanatory views illustrating the production process of the above liquid crystal display device of Fig. 1;
Figs. 3A and 3B are cross sectional views showing a liquid crystal display device according to a first embodiment of the present invention;
Fig. 4 is a graph showing the electro-optical characteristics of the first embodiment of Fig. 2;
Fig. 5 is a cross section showing an alternative embodiment of the liquid crystal display device of Figs. 3A and 3B; and
Fig. 6 is a cross sectional view showing a liquid crystal display device according to a second embodiment of the present invention.

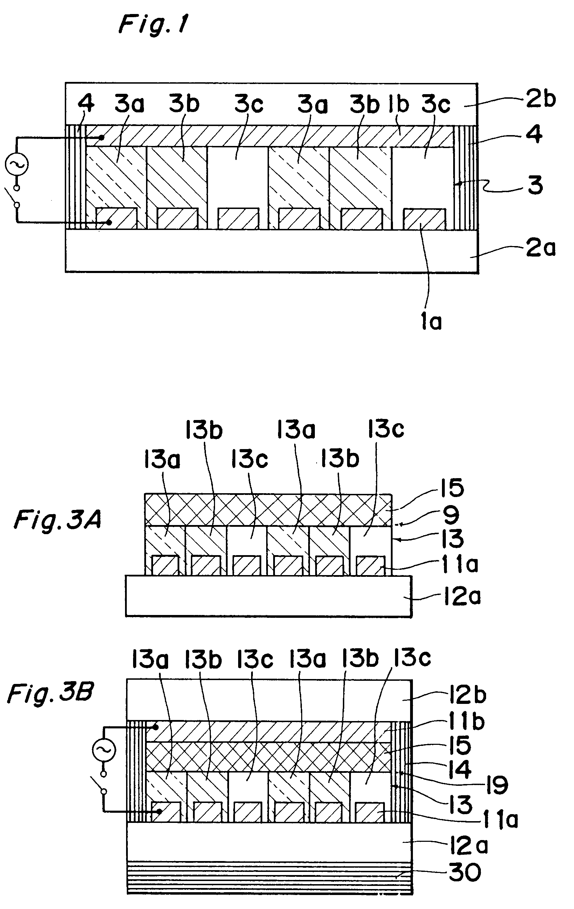

Fig. 1 shows a liquid crystal display device. As shown in Fig. 1, the liquid crystal display device has a pair of transparent substrates 2a, 2b, each having electrodes 1a, 1b in a striped pattern on the inside surface, and a light modulation portion 3 sandwiched between the transparent substrates 2a, 2b. Reference number 4 indicates a sealant.

The electrodes 1a, 1b are processed into a striped pattern after vapor deposition of a transparent conductive film of, for example, indium tin oxide (ITO) on the transparent substrates 2a, 2b which are made of glass or plastic. The electrodes 1a, 1b are arranged on the two substrates 2a, 2b to be mutually intersecting.

The light modulation material 3 is constituted from regions 3a, 3b, 3c, each containing dichroic pigment, liquid crystal, and a polymer resin supporter. The regions 3a, 3b, 3c form a single light modulation layer parallel to the pair of transparent substrates 2a, 2b with a cyclical pattern. The regions 3a, 3b, 3c each show a different color, specifically red, green, and blue, respectively.

The polymer resin may be a gelatin, casein, fish glue, polyvinyl alcohol or polyvinyl pyrrolidone, or a variant of these photosensitized with chromate or dichromate, or a polyvinyl alcohol stilbazolium or acrylate.

The liquid crystal material is a nematic liquid crystal or smectic liquid crystal of cyanobiphenyl, cyanoterphenyl, cyanophenylcyclohexane, phenyl pyrimidine, cyclohexyl-phenylpyrimidine, alkylbenzoate, or cyanobenzoate, or a mixture of these. A nematic liquid crystal containing 0.5% - 10% chiral cholesteric ester is also desirable.

The dichroic pigment is an azo or anthraquinone pigment, including, for example, G209, G266, G269, G168, G165, G224, G205, G232, or G237 manufactured by Nihon Kanko Shikiso Ken, or D5, D11, or D35 manufactured by BDH.

Through selective use of the liquid crystal material or controlling the grain diameter, the regions 3a, 3b, 3c can be changed from a colored to a colorless transparent state at a threshold voltage by applying an electric field between the electrodes 1a, 1b on the pair of transparent substrates 2a, 2b.

The liquid crystal display device as thus described is manufactured as follows.

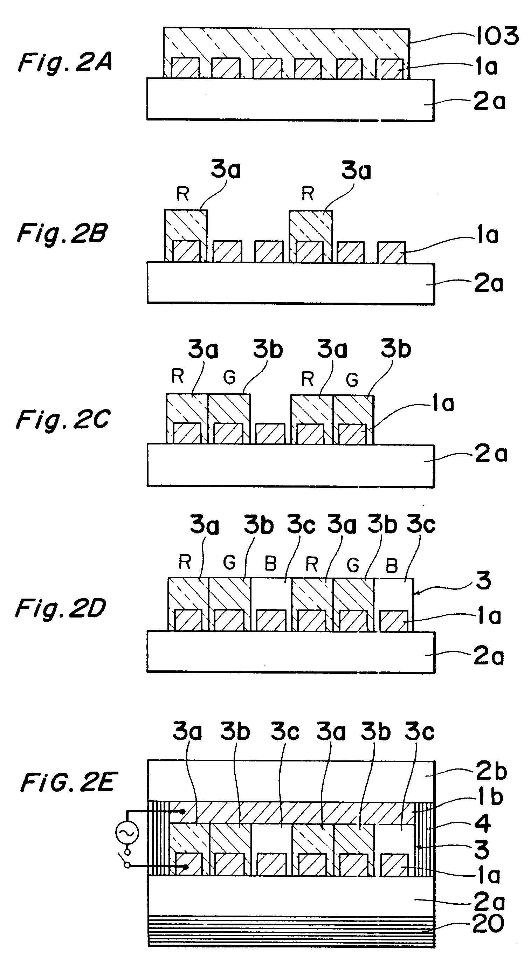

First, 30 % by weight of a bifunctional acrylate (HX-620, mfg. by Nihon Kayaku) which is a UV-polymerizable compound, 70 % by weight of a nematic liquid crystal ( ZLI-1565, mfg. by Merck & Co., Inc.) containing a red dichroic pigment (G205, mfg. by Nihon Kanko Shikiso Ken), and a small amount of polymerization initiator (Darocure 1173, mfg. by Merck & Co., Inc.) are mixed to produce a uniform solution, which is then filtered. This solution is spin coated to a 10 »m thickness on the transparent substrate 2a on which are formed the ITO transparent electrodes 1a as shown in Fig. 2A, and the resulting film 103 is exposed to ultraviolet light through a mask (not shown) with a cyclical pattern. The exposed film 103 is then spray developed, selectively removing the unexposed regions as shown in Fig. 2B. The first regions (red light modulation regions) 3a are thus formed. Because a polymer resin is used, the dichroic pigment and liquid crystal can be formed to a uniform density.

Next, 30 % by weight of a bifunctional acrylate (H-620, mfg. by Nihon Kayaku) which is a UV-polymerizable compound, 70 % by weight of a nematic liquid crystal ( ZLI-1565, mfg. by Merck & Co., Inc.) containing a green dichroic pigment (G209 and G232, mfg. by Nihon Kanko Shikiso Ken) and a small amount of polymerization initiator (Darocure 1173, mfg. by Merck & Co., Inc.) are mixed to produce a uniform solution, which is then filtered. This solution is spin coated to a 10 »m thickness across the entire transparent substrate 2a on which are formed the red light modulation regions 3a, and the resulting film (not shown) is exposed through an aligned mask to form the second (green light modulation) regions 3b as shown in Fig. 2C.

30 % by weight of a bifunctional acrylate (HX-620, mfg. by Nihon Kayaku) which is a UV-polymerizable compound, 70 % by weight of a nematic liquid crystal (ZLI-1565, mfg. by Merck & Co., Inc.) containing a blue dichroic pigment (G165, mfg. by Nihon Kanko Shikiso Ken), and a small amount of polymerization initiator (Darocure 1173, mfg. by Merck & Co., Inc.) are mixed to produce a uniform solution, which is then filtered. This solution is spin coated to a 10 »m thickness across the entire transparent substrate 2a on which are formed the red light modulation regions 3a and green light modulation regions 3b, and the resulting film (not shown) is exposed through an aligned mask to form the third (blue light modulation) regions 3c as shown in Fig. 2D.

After thus forming the light modulation layer 3, the other transparent substrate 2b with electrodes 1b is placed on the light modulation layer 3 as shown in Fig. 2E to complete production. The resulting liquid crystal display substrate is thus formed with the regions 3a, 3b, 3c of the light modulation layer 3 in a mutually adjacent state.

When a voltage is not applied to the electrodes 1a, 1b sandwiching the light modulation layer 3, or when the applied voltage does not exceed the threshold voltage for each of the regions 3a, 3b, 3c, the liquid crystal molecules in each region 3a, 3b, 3c are supported by the polymer resin in an unordered arrangement. Because only polarized light in which the direction of light oscillation is parallel to long axes of the dichroic pigments contained in the regions 3a, 3b, 3c is absorbed, each of the regions 3a, 3b, 3c remains respectively colored red, green, and blue. Colors can therefore be displayed with additive color mixing by light passing through the light modulation layer 3.

When a voltage exceeding the threshold voltage is applied to only one part of the regions 3a, 3b, 3c in the light modulation layer 3, for example, when a voltage exceeding the threshold voltage is applied to only the green light modulation region 3b and blue light modulation region 3c, the liquid crystal molecules in these two regions 3b, 3c are aligned with their respective long axes parallel to the electric field, and dichroic pigment molecules are also parallel to the liquid crystal molecules. Therefore, these two regions 3b, 3c become transparent and colorless, and transmit light. At the same time, the red light modulation region 3a remains in the red colored state. Therefore, the transmissivity of the overall light modulation layer 3 is increased compared with that of a conventional color LCD device, and a bright red display can be achieved. The same is true with a green display and a blue display: a bright display can be achieved.

When a voltage exceeding the threshold voltage is applied to each of the regions 3a, 3b, 3c in the light modulation layer 3, light absorption stops in each of the regions 3a, 3b, 3c, and the overall light modulation layer 3 becomes transparent and colorless. Therefore, a bright, white display can be achieved without reducing transmissivity by the use of color filters. Thus, a bright, vivid multiple color display can be achieved without using a polarization plate or color filters. Therefore, by providing a reflection plate 20 on the back as shown in Fig. 2E, a reflective color display can be achieved.

It is to be noted that by forming a protective film of, for example, acrylic, urethane, or epoxy around the regions 3a, 3b, 3c to separate each of the regions 3a, 3b, 3c, bleeding of the liquid crystals between regions can be prevented, and an even sharper display can be achieved.

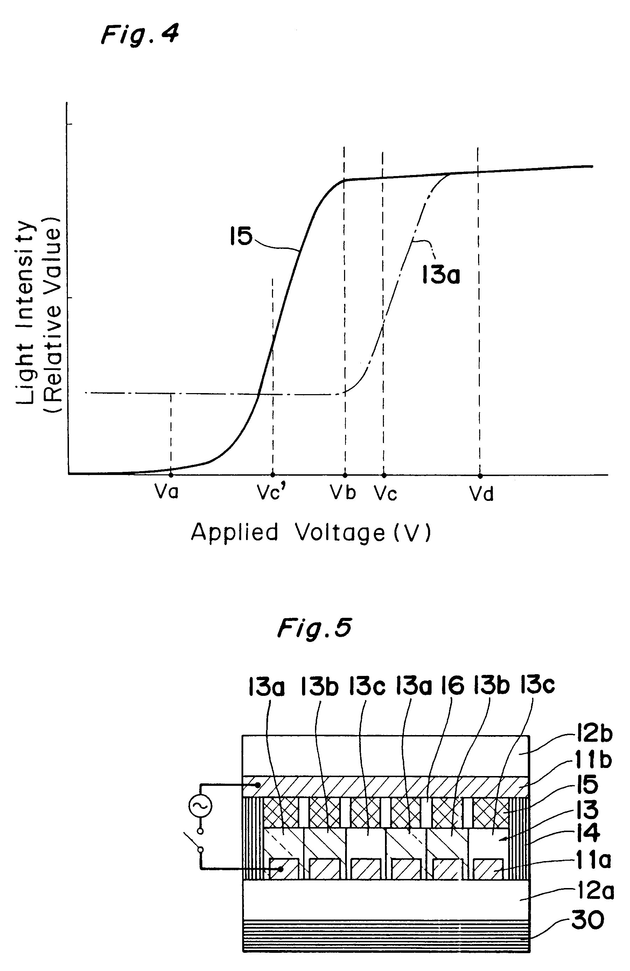

A liquid crystal display (LCD) device of a first embodiment according to the present invention is shown in Figs. 3A and 3B. As shown in Fig. 3A, in this LCD device red, green, and blue light modulation regions 13a, 13b, 13c are formed in a single layer (lower layer) 13 on a transparent substrate 12a on which are formed ITO transparent electrodes 11a as in the example described above, and a shutter layer (upper layer) 15 is laminated onto this lower layer 13. The lower layer 13 and the shutter layer 15 together form a light modulation portion 9. The shutter layer 15 is formed as follows.

First, 30 % by weight of a bifunctional acrylate 30 (HX-620, mfg. by Nihon Kayaku) which is a UV-polymerizable compound, a dichroic pigment (G209, G168, G165, G224, G205, and G232, mfg. by Nihon Kanko Shikiso Ken) mixed to show a black color, and 70 % by weight of a nematic liquid crystal (ZLI-3201-000, mfg. by Merck & Co., Inc.) are mixed with a small amount of polymerization initiator (Darocure 1173, mfg. by Merck & Co., Inc.) to produce a uniform solution, which is then filtered. The above nematic liquid crystal ZLI-3201-000 has a threshold voltage which is lower than that of the liquid crystals contained in each of the light modulation regions 13a, 13b, 13c in the lower layer 13. This solution is spin coated to a 10 »m thickness on the top of the lower layer 13, and the entire surface is exposed. In this way, production of the upper layer 15 is completed. As shown in Fig. 3B, another transparent substrate 12b with electrodes 11b are placed on the upper layer 15 so that the electrodes 11a on the transparent substrate 12a perpendicularly intersect those 11b of the other transparent substrate 12b, and a reflection plate 30 is provided on the back, as in the example above.

When thus produced, this liquid crystal display device exhibits electro-optical characteristics as shown in Fig. 4 at, for example, the red light modulation region 13a. In Fig. 4, the solid line and the dot-dash line represent the optical characteristics of the shutter layer 15 and of the red light modulation region 13a of the lower layer 13, respectively.

When a voltage applied between the electrodes 11a, 11b is Va, the shutter layer 15 is colored black, and the display is therefore black overall regardless of the color state of the red light modulation region 13a. When the applied voltage is Vb, the shutter layer 15 is colorless and transparent, and the red light modulation region 13a is colored red. Thus, when the green light modulation region 13b and blue light modulation region 13c of the lower layer 13, for example, are also colorless and transparent at this time, a bright red is displayed. It follows, of course, that when these two regions 13b, 13c are also colored, the resulting display is a mixture of the colors in these three regions 13a, 13b, 13c. When the applied voltage is Vd, both the shutter layer 15 and the red light modulation region 13a are colorless and transparent. Therefore, when the green light modulation region 13b and blue light modulation region 13c of the lower layer 13 are also colorless and transparent, the display is a bright white. In addition, when the applied voltage is Vc′ or Vc, an intermediate color is displayed. As obvious from the above, because this liquid crystal display device has the shutter layer 15 in the light modulation portion 9, a bright, clear full color display, including black, can be achieved.

Furthermore, when the shutter layer 15 is laminated to the lower layer 13, a transparent layer of, for example, acrylic or polyimide can be sandwiched between the two layers 13, 15 to prevent bleeding of the liquid crystal between the two layers 13, 15.

In addition, a shield layer 16 may also be formed using "Color Mosaic CK" manufactured by Fuji Hunt Electronics Technology in the shutter layer 15 at sites corresponding to the boundaries of the regions 13a, 13b, 13c in the lower layer 13. Consequently, an even better full color display can be achieved.

It is to be noted that the inventors have also confirmed that a full color display can also be achieved by replacing the RGB light modulation layer 13 constructed according to the present invention with a color filter formed by such means as the dye, print, and electrodeposition methods currently used in liquid crystal color television displays and color liquid crystal displays for laptop computers, and providing the shutter layer 15 used in the first embodiment of the present invention either above or below the color filter. However, the first embodiment of the present invention offers a better brightness characteristic than this modified display, especially with regard to white.

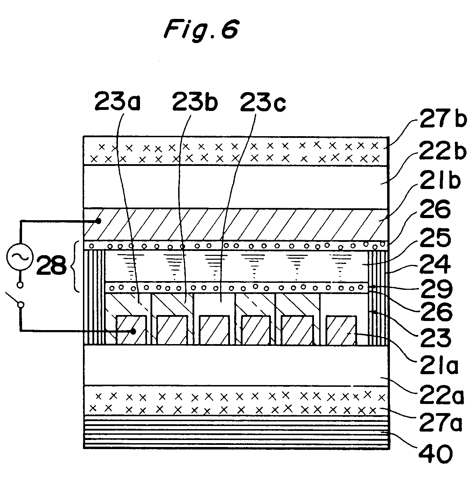

A second embodiment of the present invention is shown in Fig. 6.

An RGB light modulation layer 23 and a shutter layer 28 consisting of a 90 degree twisted nematic liquid crystal layer 25 and upper and lower orientation films 26 sandwiching the crystal layer 25 are laminated between the pair of transparent substrates 22a, 22b with electrodes 21a, 21b, respectively. The orientation films 26 are formed by spin coating the top and bottom of the crystal layer 25 with polyimide and then rubbing it. Polarization plates 27a, 27b are provided outside the transparent substrates 22a, 22b so that the polarization axes of both are parallel, and a reflection plate 40 is provided behind the transparent substrate 22a.

This liquid crystal display device exhibits electro-optical characteristics similar to those shown in Fig. 4 at, for example, the red light modulation region 23a. Therefore, while the display brightness is less than that of the first embodiment due to the use of the polarization plates 27, a good full color display can still be achieved.

It is to be noted that the same effect will be achieved even if the laminating order of the light modulation layers 13, 23 and the shutter layers 15, 28 in Figs. 5 and 6, respectively, is reversed.

It is also to be noted that while a bifunctional acrylate is used as the polymer resin forming the light modulation portion in the preferred embodiments described hereinabove, the polymer resin shall not be thus limited, and a polyvinyl alcohol stilbazole derivative may also be used.

The invention being thus described, it will be obvious that the same may be varied in many ways. Such variations are not to be regarded as a departure from the scope of the invention.

## Claims

1. A liquid crystal display device for displaying multiple colors wherein a light modulation portion (13;23) containing a liquid crystal or a mixture of liquid crystals is sandwiched between a pair of transparent substrates (12a,12b;22a,22b) each having electrodes (11a,11b;21a,21b) on an inner surface thereof,
the light modulation portion (13;23) including a plurality of mutually adjacent regions (13a,13b,13c; 23a,23b,23c) of at least two different kinds arranged in a predetermined pattern in a single light modulation layer (13;23) parallel to the transparent substrates (12a,12b;22a,22b), each of said regions (13a,13b,13c; 23a,23b,23c) containing dichroic pigment in addition to the liquid crystal or the mixture of liquid crystals, the dichroic pigment contained in the regions (13a;23a) of one kind being different from the dichroic pigment contained in the regions (13b,13c;23b,23c) of the other kinds, characterised by a shutter layer (15;28) containing a liquid crystal or a mixture of liquid crystals laminated on said single light modulation layer in the light modulation portion (13;23), the liquid crystal or the mixture of liquid crystals contained in the shutter layer (15;28) being orientable in a specific direction with a threshold voltage which is different from a threshold voltage of the liquid crystal or the mixture of liquid crystals contained in the light modulation layer (13;23).

2. A liquid crystal display device according to claim 1, wherein a shield layer (16) is formed in the shutter layer (15) at sites corresponding to boundaries of said regions (13a,13b,13c) in the light modulation layer (13).

3. A liquid crystal display device according to claim 1 or 2, wherein the shutter layer (28) is constituted from a liquid crystal layer (25) and a pair of orientation layers (26) sandwiching the liquid crystal layer (25), and a polarization plate (27a,27b) is provided on an outer surface of each of the transparent substrates (22a,22b).

4. A liquid crystal display device according to any preceding claim, wherein each of said adjacent regions (13a,13b,13c;23a,23b,23c) in the light modulation portion (13;23) contains a polymer resin supporting the liquid crystal or the mixture of liquid crystals.

5. A liquid crystal display device according to claim 4, wherein each of said regions (13a,13b,13c;23a,23b, 23c) is formed from a mixture comprising the liquid crystal, the dichroic pigment and the polymerizable compound.

6. A liquid crystal display device according to any preceding claim, further comprising a reflection plate (40) to reflect incident light.

## Patentansprüche

1. Flüssigkristall-Anzeigevorrichtung zum Anzeigen mehrerer Farben, bei der ein Lichtmodulationsabschnitt (13; 23), der einen Flüssigkristall oder eine Mischung von Flüssigkristallen enthält, zwischen ein Paar transparente Substrate (12a, 12b; 22a, 22b), die jeweils Elektroden (11a, 11b; 21a, 21b) an ihrer Innenseite tragen, eingebettet ist,
- wobei der Lichtmodulationsabschnitt (13; 23) mehrere zueinander benachbarte Bereiche (13a, 13b, 13c; 23a, 23b, 23c) mindestens zweier verschiedener Arten enthält, die mit einem vorgegebenen Muster in einer einzelnen Lichtmodulationsschicht (13; 23) parallel zu den transparenten Substraten (12a, 12b; 22a, 22b) angeordnet sind, wobei jeder der Bereiche (13a, 13b, 13c; 23a, 23b, 23c) ein dichroitisches Pigment zusätzlich zum Flüssigkristall oder der Mischung von Flüssigkristallen enthält, wobei das dichroitische Pigment, das in den Bereichen (13a; 23a) der einen Art enthalten ist, vom dichroitischen Pigment verschieden ist, das in den Bereichen (13b, 13c; 23b, 23c) der anderen Arten enthalten ist, **gekennzeichnet durch** eine Verschlußschicht (15; 28), die einen Flüssigkristall oder eine Mischung von Flüssigkristallen enthält und im Lichtmodulationsabschnitt (13; 23) auf die einzelne Lichtmodulationsschicht auflaminiert ist, wobei der Flüssigkristall oder die Mischung von Flüssigkristallen in der Verschlußschicht (15; 28) bei einer Schwellenspannung in einer speziellen Richtung ausrichtbar ist, die sie von der Schwellenspannung des Flüssigkristalls oder der Mischung von Flüssigkristallen unterscheidet, wie in der Modulationsschicht (13; 23) enthalten.

2. Flüssigkristall-Anzeigevorrichtung nach Anspruch 1, bei der in der Verschlußschicht (15) an Orten, die Grenzen der Bereiche (13a, 13b, 13c) in der Lichtmodulationsschicht (13) entsprechen, eine Abschirmungsschicht (16) ausgebildet ist.

3. Flüssigkristall-Anzeigevorrichtung nach einem der Ansprüche 1 oder 2, bei der die Verschlußschicht (28) aus einer Flüssigkristallschicht (25) und einem Paar die Flüssigkristallschicht (25) einbettenden Ausrichtungsschichten (26) besteht, und eine Polarisationsplatte (27a, 27b) an der Aussenseite jedes der transparenten Substrate (22a, 22b) vorhanden ist.

4. Flüssigkristall-Anzeigevorrichtung nach einem der vorstehenden Ansprüche, bei der jeder der benachbarten Bereiche (13a, 13b, 13c; 23a, 23b, 23c) im Lichtmodulationsabschnitt (13; 23) ein Polymerharz enthält, das den Flüssigkristall oder die Mischung von Flüssigkristallen hält.

5. Flüssigkristall-Anzeigevorrichtung nach Anspruch 4, bei der jeder der Bereiche (13a, 13b, 13c; 23a, 23b, 23c) aus einer Mischung besteht, die den Flüssigkristall, das dichroitische Pigment und die polymerisierbare Verbindung enthält.

6. Flüssigkristall-Anzeigevorrichtung nach einem der vorstehenden Ansprüche, ferner mit einer Reflexionsplatte (40) zum Reflektieren einfallenden Lichts.

## Revendications

1. Dispositif d'affichage à cristaux liquides pour afficher de multiples couleurs, dans lequel une partie modulation de lumière (13 ; 23) contenant un cristal liquide ou un mélange de cristaux liquides, est prise en sandwich entre une paire de substrats transparents (12a, 12b ; 22a, 22b), ayant chacun des électrodes (11a, 11b ; 21a, 21b) sur leur face intérieure,
la partie modulation de lumière (13 ; 23) comprenant plusieurs zones (13a, 13b, 13c ; 23a, 23b, 23c) mutuellement adjacentes, d'au moins deux types différents, disposés selon un motif prédéterminé dans une unique couche de modulation de lumière (13 ; 23) parallèle aux substrats transparents (12a, 12b ; 22a, 22b), chacune desdites zones (13a, 13b, 13c ; 23a, 23b, 23c) contenant un pigment dichroïque en plus du cristal liquide ou du mélange de cristaux liquides, le pigment dichroïque contenu dans les zones (13a ; 23a) d'un type étant différent du pigment dichroïque contenu dans les zones (13b, 13c ; 23b, 23c) des autres types, caractérisé par une couche d'obturation (15 ; 28) contenant un cristal liquide ou un mélange de cristaux liquides, déposée en revêtement sur ladite unique couche de modulation de lumière dans la partie modulation de lumière (13 ; 23), le cristal liquide ou le mélange de cristaux liquides contenus dans la couche d'obturation (15 ; 28) étant orientables dans une direction spécifique par une tension de seuil, qui est différente d'une tension de seuil du cristal liquide ou du mélange de cristaux liquides contenus dans la couche de modulation de lumière (13; 23).

2. Dispositif d'affichage à cristaux liquides selon la revendication 1, dans lequel une couche-écran (16) est formée dans la couche d'obturation (15) en des emplacements correspondant aux limites desdites zones (13a, 13b, 13c) dans la couche de modulation de lumière (13).

3. Dispositif d'affichage à cristaux liquides selon la revendication 1 ou 2, dans lequel la couche d'obturation (28) est constituée à partir d'une couche de cristaux liquides (25) et d'une paire de couches d'orientation (26), prenant en sandwich la couche de cristaux liquides (25), une plaque de polarisation (27a, 27b) étant prévue sur une face extérieure de chacun des substrats transparents (22a, 22b).

4. Dispositif d'affichage à cristaux liquides selon l'une quelconque des revendications précédentes, dans lequel chacune desdites zones adjacentes (13a, 13b, 13c ; 23a, 23b, 23c) de la partie modulation de lumière (13 ; 23) contient une résine polymère supportant le cristal liquide ou le mélange de cristaux liquides.

5. Dispositif d'affichage à cristaux liquides selon la revendication 4, dans lequel chacune desdites zones (13a, 13b, 13c ; 23a, 23b, 23c) est formée à partir d'un mélange comprenant le cristal liquide, le pigment dichroïque et le composé polymérisable.

6. Dispositif d'affichage à cristaux liquides selon l'une quelconque des revendications précédentes, comprenant en outre une plaque de réflexion (40) pour réfléchir la lumière incidente.
